# EUROPEAN PATENT APPLICATION

(11) **EP 3 910 492 A2**
(43) Date of publication of application: **17.11.2021**
(21) Application number: 21198437.2
(22) Date of filing: 23.09.2021
(51) Int. Cl.: G06F 16/33

(54) **EVENT EXTRACTION METHOD AND APPARATUS, AND STORAGE MEDIUM**

(30) Priority: 26.11.2020 CN 202011356616
(71) Applicant: Beijing Baidu Netcom Science And Technology Co., Ltd., Beijing 100085 (CN)
(72) Inventor: LI, Xinyu, Beijing, 100085 (CN); LI, Fayuan, Beijing, 100085 (CN); PAN, Lu, Beijing, 100085 (CN); CHEN, Yuguang, Beijing, 100085 (CN)
(74) Representative: Maiwald Patent- und Rechtsanwaltsgesellschaft mbH

(57) **Abstract**

The present disclosure provides an event extraction method and apparatus, electronic device and a storage medium, which relate to the computer technical field, in particular to a technical field of artificial intelligence such as natural language processing, deep learning and knowledge maps. The method includes: obtaining (S101) an event description text; determining (S102) at least one candidate event type according to the event description text, wherein the candidate event type corresponds to a set of query sentences; and extracting (S103) a corresponding event element from the event description text according to the query sentence. The dependence of event element extraction on an event definition system can be effectively reduced, the extraction effect of the event element is effectively improved, and the method has relatively good generalization ability.

## Description

### TECHNICAL FIELD

This application relates to the field of computer technology, specifically to a field of artificial intelligence technology such as natural language processing, deep learning, and knowledge maps, and in particular to an event extraction method and apparatus, and a storage medium.

### BACKGROUND

Artificial intelligence aims at the study of making computers to simulate certain human thinking processes and intelligent behaviors (such as learning, reasoning, thinking, planning, etc.). It has both hardware-level technology and software-level technology. Artificial intelligence hardware technologies generally include technologies such as sensors, dedicated artificial intelligence chips, cloud computing, distributed storage, and big data processing; artificial intelligence software technologies mainly include computer vision technology, speech recognition technology, natural language processing technology, and machine learning/depth learning, big data processing technology, and knowledge graph technology and the like.

Event Extraction technology refers to analyzing the natural text of event description and obtaining structured event description information. Event extraction is an important way to transform the rich unstructured text in the objective world into structured knowledge, which is used in financial risk control, public opinion monitoring and other aspects have broad application prospects.

### SUMMARY

An event extraction method and apparatus, and a storage medium are provided.

An event extraction method is provided in embodiments of the present disclosure. The method includes: obtaining an event description text; determining at least one candidate event type according to the event description text, in which the candidate event type corresponds to a set of query sentences; and extracting a corresponding event element from the event description text according to the query sentence.

An event extraction apparatus is provided in embodiments of the present disclosure. The apparatus includes: an obtaining module, configured to obtain an event description text; a determining module, configured to determine at least one candidate event type according to the event description text, in which the candidate event type corresponds to a set of query sentences; and an extracting module, configured to extract a corresponding event element from the event description text according to the query sentence.

A non-transitory computer-readable storage medium storing computer instructions is provided in embodiments of the present disclosure, in which when the computer instructions are executed by a computer, the computer is caused to perform the event extraction method of the present disclosure.

It should be understood that, the content described in the part is not intended to recognize key or important features of embodiments of the present disclosure, nor intended to limit the scope of the present disclosure. Other features of the present disclosure will be easy to understand through the following specification.

### BRIEF DESCRIPTION OF THE DRAWINGS

The drawings are intended to better understand the solution, and do not constitute a limitation to the present disclosure.
Fig. 1 is a schematic diagram of a first embodiment according to the present disclosure;
Fig. 2 is a schematic diagram of a second embodiment according to the present disclosure;
Fig. 3 is a schematic diagram of a third embodiment according to the present disclosure;
Fig. 4 is a schematic diagram of a fourth embodiment according to the present disclosure; and
Fig. 5 is a block diagram of an electronic device used to implement the event extraction method of an embodiment of the present disclosure.

### DETAILED DESCRIPTION

The exemplary embodiments of the present disclosure are described as below with reference to the accompanying drawings, which include various details of embodiments of the present disclosure to facilitate understanding, and should be considered as merely exemplary. Therefore, those skilled in the art should realize that various changes and modifications may be made to the embodiments described herein without departing from the scope and spirit of the present disclosure. Similarly, for clarity and conciseness, descriptions of well-known functions and structures are omitted in the following descriptions.

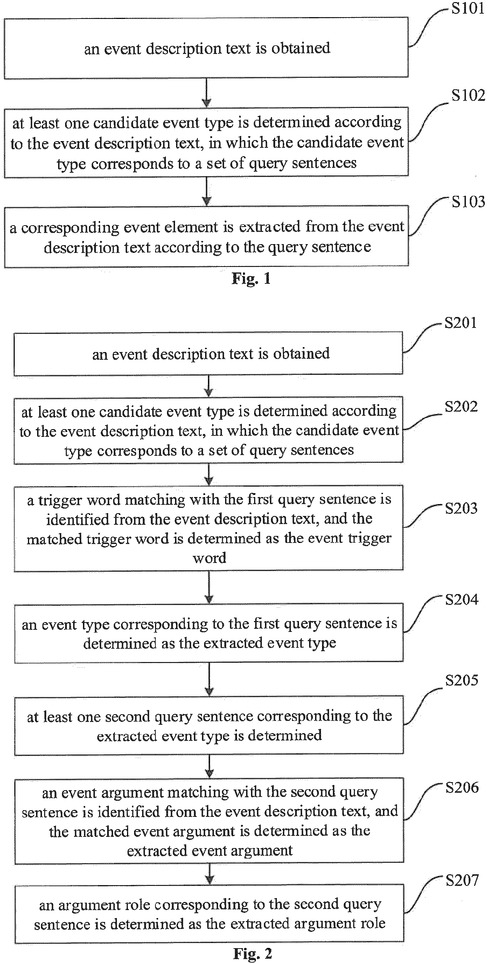

Fig. 1 is a schematic diagram of a first embodiment according to the present disclosure.

It should be noted that the execution subject of the event extraction method in this embodiment is an event extraction apparatus, which can be implemented by software and/or hardware. The apparatus can be configured in an electronic device. The electronic device may include but not limited to a terminal, a server and the like.

Embodiments of the application relate to the fields of artificial intelligence technology such as natural language processing, deep learning, and knowledge maps.

Artificial intelligence (AI) is a new technological science that studies and develops theories, methods, technologies and application systems used to simulate, extend and expand human intelligence.

Deep learning is to learn the internal rules and representation levels of sample data. The information obtained in the learning process is of great help to the interpretation of data such as text, images and sounds. The ultimate goal of deep learning is to allow machines to have the ability to analyze and learn like humans, and to recognize data such as text, images, and sounds.

Natural language processing can realize various theories and methods for effective communication between humans and computers in natural language. Deep learning is to learn the internal rules and representation levels of sample data. The information obtained in the learning process is of great help to the interpretation of data such as text, images and sounds. The ultimate goal of deep learning is to allow machines to have the ability to analyze and learn like humans, and to recognize data such as text, images, and sounds.

The knowledge map combines the theories and methods of applied mathematics, graphics, information visualization technology, information science and other disciplines with metrological citation analysis, co-occurrence analysis and other methods, and uses the visual map to vividly display the core structure, development history, frontier fields, and the overall knowledge structure of a discipline to achieve the modern theory of multi-disciplinary integration.

As shown in Fig. 1, the event extraction method includes followings.

At step S101, an event description text is obtained.

For example, the event description text is a text with corresponding semantics, the semantics in the event description text describes an event. The event description text is, for example, "What a tragedy! A 35-year-old woman from Shaoxing Shimao fell off the building and died!".

In the embodiment of the present disclosure, a text input interface may be provided via an electronic device to receive a piece of text inputted by a user which is used as the event description text, or it may also parse a piece of speech inputted by the user and the piece of speech is converted into a corresponding text which is used as the event description text, which is not limited in the present disclosure.

At step S102, at least one candidate event type is determined according to the event description text, in which the candidate event type corresponds to a set of query sentences.

For example, the event description text can be semantically analyzed to obtain corresponding semantic results after obtaining the event description text, so as to determine at least one candidate event type that matches the semantic result from a large number of candidate event types. Alternatively, the existing candidate event types may be directly determined. The candidate event types can be [event death], [event marriage], [event education], [event tourism], and so on.

In the embodiment of the present disclosure, each candidate event type corresponds to a set of query sentences, which are used to match corresponding event elements from the event description text, and each set of query sentences may include one or more query sentences. For example, different query sentences may be used to match different types of event elements from the event description text.

For example, a query sentence may be [What is the trigger word for the event death?]. For another example, a query sentence may be [what is the trigger word for the event marriage?]. Different query sentences can correspond to the candidate event types. For example, [What is the trigger word for the event death?] corresponds to the candidate event type [event death], and [what is the trigger word for the event marriage?] corresponds to the candidate event type [event marriage], which is not limited herein.

At step S103, a corresponding event element is extracted from the event description text according to the query sentence.

The corresponding event element can be extracted from the event description text according to the query sentence after the at least one candidate event type is determined according to the event description text.

That is to say, in the embodiment of the application, the query sentence corresponding to the candidate event type is used, and the corresponding event element is matched from the event description text, and when extracting the corresponding event element from the event description text according to the query sentence, the corresponding event element can be extracted from the event description text by means of semantic recognition and semantic matching.

For example, when a query sentence such as [What is the trigger word for the event death?], the matched content can be identified from the event description text as the extracted event element. For example, for the sentence [What is the trigger word for the event death?], the matched content is [death], then [death] can be used as the identified event element.

For another example, when a query sentence is [What is the trigger word for the event marriage?], the matched content can be identified from the event description text as the extracted event element. For example, for the sentence [What is the trigger word for the event marriage?], the matched content in the event description text of the above example is NULL, which means that the event description text and the query sentence [What is the trigger word of the event marriage?] are not matched, that is, the event type corresponding to the event description text is not matched with the candidate event type corresponding to the query sentence [What is the trigger word for the event marriage?].

In some embodiments, extracting the corresponding event element from the event description text according to the query sentence may be: extracting an event trigger word, an event type, an event argument, and an argument role from the event description text according to the query sentences; and determining the event trigger word, the event type, the event argument, and the argument role as the corresponding event element. Therefore, the event trigger word, the event type, the event argument, and the argument role may be identified in a manner of semantic matching by using the query sentences, thereby effectively improving the completeness of event element extraction.

The event trigger word may be a core word that indicate the occurrence of an event, which are mostly verbs or nouns. The event type may be a classification that the event belongs to. The event argument represents a participant in the event, mainly composed of an entity, a value, and a time. The argument role represents a role of an event argument in the event.

In the embodiment of the application, the event trigger word, the event type, the event argument, and the argument role may be extracted from the event description text in a manner of semantic matching by using the query sentences, and the event trigger word, the event type, the event argument, and the argument role are determined as the corresponding event element.

In order to quickly and accurately identify the event trigger word, the event type, the event argument, and the argument role from the event description text, in this embodiment of the application, the query sentence can also include: at least one first query sentence, the first query sentence corresponds to one event type, and the event type corresponds to at least one second query sentence, the second query sentence corresponds to one argument role, the first query sentence is configured to extract the event trigger word and the event type in the event description text, and the second query sentence is configured to extract the event argument and the argument role.

That is to say, each set of query sentences in the embodiment of the present disclosure includes a first query sentence and a second query sentence, and the number of the first query sentence is at least one, and when there are multiple first query sentences, each query sentence corresponds to a type of event, the event type corresponds to at least one second query sentence, and the second query sentence also corresponds to an argument role.

For example, for the first query sentence [What is the trigger word for the event death?], the corresponding event type is [event death], and [event death] also corresponds to at least one second query sentence [who is the dead person?], then the argument role corresponding to the second query sentence is [the dead person], where [death] can be the abbreviation of the event type [event death], that is, each event type includes multiple argument roles. The [argument role] may also include a time, a place, a scene and other content, then different second query sentences can be used to match event arguments corresponding to other argument roles such as time, place, scene, etc. from the event description text.

In this embodiment, an event description text is obtained, and at least one candidate event type is determined according to the event description text, in which the candidate event type corresponds to a set of query sentences; and a corresponding event element is extracted from the event description text according to the query sentences. The dependence of event element extraction on an event definition system can be effectively reduced, the extraction effect of the event element is effectively improved, and the method has relatively good generalization ability.

Fig. 2 is a schematic diagram of a second embodiment according to the present disclosure. As shown in Fig. 2, the event extraction method includes followings.

At step S201, an event description text is obtained.

At step S202, at least one candidate event type is determined according to the event description text, in which the candidate event type corresponds to a set of query sentences.

The description of S201-S202 refers to the above-mentioned embodiment, which will not be repeated here.

At step S203, a trigger word matching with the first query sentence is identified from the event description text, and the matched trigger word is determined as the event trigger word.

In this embodiment, the configuration query sentence includes: at least one first query sentence, the first query sentence corresponds to an event type, the event type corresponds to at least one second query sentence, and the second query sentence also corresponds to an argument role, the first query sentence is used to extract the event trigger word and the event type from the event description text, and the second query sentence is used to extract the event argument and the argument role, which is not limited herein.

For example, there are query sentences with other contents according to actual application requirements, and other content query sentences are used to identify any event element from the event description text, which is not limited herein.

When the query sentence includes at least one first query sentence and at least one second query sentence, and the first query sentence is used to extract the event trigger word and the event type from the event description text, and the second query sentence is used to extract the event argument and the argument role, the trigger word that matches the first query sentence can be identified from the event description text, and the matched trigger word can be used as the event trigger word.

For example, the first query sentence is [What is the trigger word for the event death?], the corresponding event type is [event death], then the matched trigger word [death] may be identified from the first query sentence [What is the trigger word for the event death?] in the event description text" What a tragedy! A 35-year-old woman from Shaoxing Shimao fell off the building and died!", which means that the identified content of the first query sentence [What is the trigger word of the event death?] is not NULL. If the identified content is NULL, the next first query sentence can be traversed until the corresponding trigger word is matched by using a first query sentence. If it is not empty, the identified trigger word will be directly used as the event trigger word.

Optionally, in some embodiments, identifying the trigger word matching with the first query sentence from the event description text may be performed by inputting the event description text and the first query sentence into a pre-trained event trigger word extraction model to obtain the matched trigger word outputted by the event trigger word extraction model. As the semantic identification and the trigger word matching are respectfully performed on the event description text and the first query sentence via the pre-trained event trigger word extraction model, the matched trigger word can be obtained quickly and accurately.

The event trigger word extraction model may be trained in advance based on massive training data. For example, the event extraction annotation data set may be obtained first, the event trigger word and event type in the event extraction annotation data may be identified, and then the format of the event trigger word and event type in the event extraction annotation data is transformed into an event trigger word extraction data set in a reading comprehension question-and-answer format. The event trigger word extraction and corresponding event type classification model in a reading comprehension question-and-answer manner is formed with a paragraph as the event description text, a query sentence formed by the event type, and an answer formed by the corresponding trigger word under the event type (if the current event does not belong to the corresponding event type, the answer will be NULL), and the trained model is used as the event trigger word extraction model. The event trigger word extraction model is trained based on massive event extraction and annotation data sets, so that a better trigger word recognition effect can be obtained.

At step S204, an event type corresponding to the first query sentence is determined as the extracted event type.

In the above, the trigger word that matches the first query sentence is identified from the event description text, and the matched trigger word is used as the event trigger word, and the event type corresponding to the first query sentence can be directly used as the extracted event type.

Therefore, the event trigger words and event types are directly extracted from the event description text based on the query sentence combined with model recognition, which simplifies the extraction processing logic of event trigger words and event types, and improves the extraction efficiency and the extraction accuracy of event trigger words and event types without relying on a large amount of data annotation information in the event definition system, so as to improve the extraction effect, and reduce the dependence of the extraction of event trigger words and event types on the event definition system.

At step S205, at least one second query sentence corresponding to the extracted event type is determined.

In the above, the trigger word that matches the first query sentence is identified from the event description text, and the matched trigger word is used as the event trigger word, and the event type corresponding to the first query sentence is directly used as the extracted event type. After that, at least one second query sentence corresponding to the extracted event type may be determined, and the second query sentence corresponding to the extracted event type may be selected from a large number of second query sentences.

That is to say, in the embodiment of the present disclosure, the event trigger word and the event type are firstly extracted, and then the corresponding second query sentence is determined according to the event type, and the second query sentence is used to extract the event argument and the role of the argument. This effectively supports the use of the second query sentence to efficiently extract event arguments and argument roles, and reduces the amount of data in the second query sentence timely, so that the pertinency of identifying the event argument and argument role on the basis of identifying the event type may be improved, which greatly improves the identification efficiency of event argument and argument role.

At step S206, an event argument matching with the second query sentence is identified from the event description text, and the matched event argument is determined as the extracted event argument.

After determining at least one second query sentence corresponding to the extracted event type, the event description text and the second query sentence can be inputted into the pre-trained event argument extraction model to obtain the matched event argument outputted by the event argument extraction model. As the semantic recognition and event argument matching processing are respectively performed on the event description text and at least one second query sentence based on the pre-trained event argument extraction module, so that the matched event argument can be quickly and accurately obtained.

The event argument extraction model can be pre-trained based on massive training data. For example, the event extraction annotation data set may be obtained first, the event argument and the role of the argument in the event extraction annotation data may be identified, and then the format of the event argument and argument role in the event extraction annotation data results is transformed into an event argument extraction data set in a reading comprehension question-and-answer format. The initial event argument extraction model (such as the neural network model in artificial intelligence) may be trained by taking a paragraph as the event description text, a question formed by the event type and argument role, and corresponding event argument as an answer. The trained model is determined as the event argument extraction model. As the event argument extraction model is trained based on massive event extraction and annotation data sets, a better recognition effect of event argument and argument role can be obtained.

At step S207, an argument role corresponding to the second query sentence is determined as the extracted argument role.

For example, the event description text is "What a tragedy! A 35-year-old woman from Shaoxing Shimao fell off the building and died!", the second question sentence is [Who is the dead person?], and the argument role corresponding to the second question sentence is [dead person], then the matching event argument is identified as [a 35-year-old woman from Shaoxing Shimao], and the argument role [dead person] is the extracted argument role.

When the event argument matching the second query sentence is identified from the event description text, the argument role corresponding to the second query sentence can be directly used as the extracted argument role.

Therefore, the argument roles and event arguments are directly extracted from the event description text based on the query sentence combined with model recognition, which simplifies the extraction processing logic of argument roles and event arguments, and improves the extraction efficiency and the extraction accuracy of argument roles and event arguments without relying on a large amount of data annotation information in the event definition system, so as to improve the extraction effect, and reduce the dependence of the extraction of argument roles and event arguments on the event definition system.

In this embodiment, the event description text is obtained, and at least one candidate event type is determined according to the event description text, in which the candidate event type corresponds to a set of query sentences, and the corresponding event description text is extracted from the event description text according to the query sentences. The dependence of event element extraction on an event definition system can be effectively reduced, the extraction effect of the event element is effectively improved, and the method has relatively good generalization ability. First, the event trigger word and event type are extracted, and then, the corresponding second query sentence is determined according to the event type, the second query sentence is used to extract the event argument and the argument role, which effectively supports the efficient extraction of the event argument and argument role by using the second query sentence and reduce the data volume of the second query sentence timely, so that the pertinency of identifying the event argument and argument role on the basis of identifying the event type may be improved, which greatly improves the identification efficiency of event argument and argument role. The event trigger words, the event types, the argument roles and event arguments are directly extracted from the event description text based on the query sentence combined with model recognition, which simplifies the extraction processing logic of the event elements, and improves the extraction efficiency and the extraction accuracy of the event elements without relying on a large amount of data annotation information in the event definition system, so as to improve the extraction effect, and reduce the dependence of the extraction of the event elements on the event definition system.

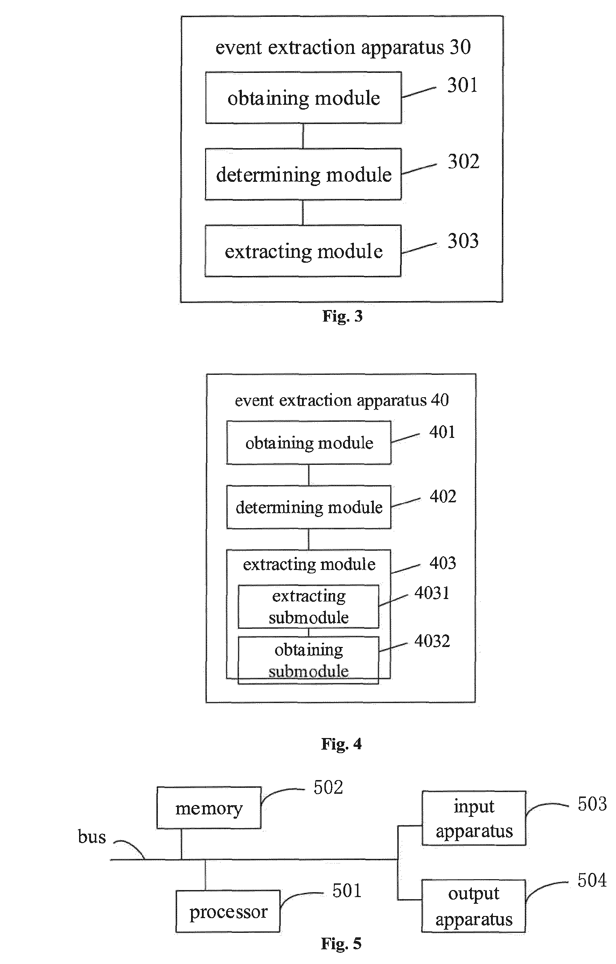

Fig. 3 is a schematic diagram of a third embodiment according to the present disclosure.

As shown in Fig. 3, the event extraction apparatus 30 includes an obtaining module 301, configured to obtain an event description text; a determining module 302, configured to determine at least one candidate event type according to the event description text, wherein the candidate event type corresponds to a set of query sentences; and an extracting module 303, configured to extract a corresponding event element from the event description text according to the query sentence.

Optionally, in some embodiments, referring to Fig. 4, Fig. 4 is a schematic diagram of a fourth embodiment according to the present disclosure. The event extraction apparatus 40 includes: an obtaining module 401, a determining module 402, and an extracting module 403, in which the extracting module 403 includes: an extracting submodule 4031, configured to extract an event trigger word, an event type, an event argument, and an argument role from the event description text according to the query sentences; and an obtaining submodule 4032, configured to determine the event trigger word, the event type, the event argument, and the argument role as the corresponding event element.

Optionally, in some embodiments, the query sentence includes: at least one first query sentence, the first query sentence corresponds to one event type, and the event type corresponds to at least one second query sentence, the second query sentence corresponds to one argument role, the first query sentence is configured to extract the event trigger word and the event type in the event description text, and the second query sentence is configured to extract the event argument and the argument role.

Optionally, in some embodiments, the extracting submodule 4031 is specifically configured to: identify a trigger word matching with the first query sentence from the event description text, and determine the matched trigger word as the event trigger word; and determine an event type corresponding to the first query sentence as the event type extracted.

Optionally, in some embodiments, the extracting submodule 4031 is also configured to: determine at least one second query sentence corresponding to the event type extracted; identify an event argument matching with the second query sentence from the event description text, and determine the matched event argument as the event argument extracted; and determine an argument role corresponding to the second query sentence as the argument role extracted.

Optionally, in some embodiments, the extracting submodule 4031 is further configured to: input the event description text and the first query sentence into a pre-trained event trigger word extraction model to obtain the matched trigger word outputted by the event trigger word extraction model.

Optionally, in some embodiments, the extracting submodule 4031 is also configured to: input the event description text and the second query sentence into a pre-trained event argument extraction model to obtain the matched event argument outputted by the event argument extraction model.

It can be understood that the event extraction apparatus 40 in Fig. 4 of this embodiment and the event extraction apparatus 30 in the above-mentioned embodiment, the obtaining module 401 in this embodiment and the obtaining module 301 in the above-mentioned embodiment, the determining module 402 in this embodiment and the obtaining module 302 in the above-mentioned embodiment, the extracting module 403 in this embodiment and the extracting module 303 in the foregoing embodiment, may have the same function and structure.

It should be noted that the foregoing explanation of the event extraction method is also applicable to the event extraction apparatus of this embodiment, and will not be repeated here.

In this embodiment, an event description text is obtained, and at least one candidate event type is determined according to the event description text, in which the candidate event type corresponds to a set of query sentences; and a corresponding event element is extracted from the event description text according to the query sentences. The dependence of event element extraction on an event definition system can be effectively reduced, the extraction effect of the event element is effectively improved, and the method has relatively good generalization ability.

An electronic device and a readable storage medium are further provided according to embodiments of the present disclosure.

As shown in Fig. 5, Fig. 5 is a block diagram of an electronic device used to implement the event extraction method of an embodiment of the present disclosure. An electronic device is intended to represent various types of digital computers, such as laptop computers, desktop computers, workstations, personal digital assistants, servers, blade servers, mainframe computers, and other suitable computers. An electronic device may also represent various types of mobile apparatuses, such as personal digital assistants, cellular phones, smart phones, wearable devices, and other similar computing devices. The components shown herein, their connections and relations, and their functions are merely examples, and are not intended to limit the implementation of the disclosure described and/or required herein.

As illustrated in Fig. 5, the electronic device includes: one or more processors 501, a memory 502, and an interface configured to connect various components, including a high-speed interface and a low-speed interface. The various components are connected to each other with different buses, and may be installed on a public main board or installed in other ways as needed. The processor may process instructions executed in the electronic device, including instructions stored in or on the memory to display graphical information of the GUI on an external input/output device (such as a display device coupled to an interface). In other implementation, multiple processors and/or multiple buses may be configured with a plurality of memories if necessary. Similarly, the processor may connect a plurality of electronic devices, and each device provides a part of necessary operations (for example, as a server array, a group of blade servers, or a multi-processor system). Fig. 5 takes one processor 501 as an example.

A memory 502 is a non-transitory computer-readable storage medium provided in the present disclosure. The memory stores instructions executable by the at least one processor, so that the at least one processor executes the event extraction method as described in the present disclosure. The non-transitory computer-readable storage medium of the present disclosure stores computer instructions, in which the computer instructions are configured so that the event extraction method provided in the present disclosure.

As a non-transitory computer-readable storage medium, the memory 502 may be configured to store non-transitory software programs, non-transitory computer-executable programs and modules, such as program instructions/modules corresponding to an event extraction method in the embodiment of the present disclosure (for example, the obtaining module 301, the determining module 302, the extracting module 303 as illustrated in Fig. 3). The processor 501 executes various functional applications and data processing of the server by running a non-transitory software program, an instruction, and a module stored in the memory 502, that is, an event extraction method in the above method embodiment is implemented.

The memory 502 may include a program storage area and a data storage area; the program storage area may store operation systems and application programs required by at least one function; the data storage area may store data created based on the use of a positioning electronic device, etc. In addition, the memory 502 may include a high-speed random access memory, and may also include a non-transitory memory, such as at least one magnetic disk storage device, a flash memory device, or other non-transitory solid-state storage devices. In some embodiments, the memory 502 optionally includes a memory set remotely relative to the processor 501 that may be connected to a positioning electronic device via a network. The example of the above networks includes but not limited to an Internet, an enterprise intranet, a local area network, a mobile communication network and their combination.

The electronic device may further include an input apparatus 503 and an output apparatus 504. The processor 501, the memory 502, the input apparatus 503, and the output apparatus 504 may be connected through a bus or in other ways. Fig. 5 takes connection through a bus as an example.

The input apparatus 503 may receive input digital or character information, and generate key signal input related to user setting and function control of a positioning electronic device, such as a touch screen, a keypad, a mouse, a track pad, a touch pad, an indicating rod, one or more mouse buttons, a trackball, a joystick and other input apparatuses. The output apparatus 504 may include a display device, an auxiliary lighting apparatus (for example, a LED) and a tactile feedback apparatus (for example, a vibration motor), etc. The display device may include but not limited to a liquid crystal display (LCD), a light emitting diode (LED) display and a plasma display. In some implementations, a display device may be a touch screen.

Various implementation modes of the systems and technologies described herein may be implemented in a digital electronic circuit system, an integrated circuit system, a dedicated ASIC (application specific integrated circuit), a computer hardware, a firmware, a software, and/or combinations thereof. The various implementation modes may include: being implemented in one or more computer programs, and the one or more computer programs may be executed and/or interpreted on a programmable system including at least one programmable processor, and the programmable processor may be a dedicated or a general-purpose programmable processor that may receive data and instructions from a storage system, at least one input apparatus, and at least one output apparatus, and transmit the data and instructions to the storage system, the at least one input apparatus, and the at least one output apparatus.

The computer programs (also called as programs, software, software applications, or codes) include machine instructions of a programmable processor, and may be implemented with high-level procedure and/or object-oriented programming languages, and/or assembly/machine languages. As used herein, the terms "a machine-readable medium" and "a computer-readable medium" refer to any computer program product, device, and/or apparatus configured to provide machine instructions and/or data for a programmable processor (for example, a magnetic disk, an optical disk, a memory, a programmable logic device (PLD)), including a machine-readable medium that receive machine instructions as machine-readable signals. The term "a machine-readable signal" refers to any signal configured to provide machine instructions and/or data for a programmable processor.

In order to provide interaction with the user, the systems and technologies described here may be implemented on a computer, and the computer has: a display apparatus for displaying information to the user (for example, a CRT (cathode ray tube) or a LCD (liquid crystal display) monitor); and a keyboard and a pointing apparatus (for example, a mouse or a trackball) through which the user may provide input to the computer. Other types of apparatuses may further be configured to provide interaction with the user; for example, the feedback provided to the user may be any form of sensory feedback (for example, visual feedback, auditory feedback, or tactile feedback); and input from the user may be received in any form (including an acoustic input, a voice input, or a tactile input).

The systems and technologies described herein may be implemented in a computing system including back-end components (for example, as a data server), or a computing system including middleware components (for example, an application server), or a computing system including front-end components (for example, a user computer with a graphical user interface or a web browser through which the user may interact with the implementation mode of the system and technology described herein), or a computing system including any combination of such back-end components, middleware components or front-end components. The system components may be connected to each other through any form or medium of digital data communication (for example, a communication network). Examples of communication networks include: a local area network (LAN), a wide area network (WAN), an internet and a blockchain network.

The computer system may include a client and a server. The client and server are generally far away from each other and generally interact with each other through a communication network. The relation between the client and the server is generated by computer programs that run on the corresponding computer and have a client-server relationship with each other. A server may be a cloud server, also known as a cloud computing server or a cloud host, is a host product in a cloud computing service system, to solve the shortcomings of large management difficulty and weak business expansibility existed in the traditional physical host and Virtual Private Server (VPS) service. A server further may be a server with a distributed system, or a server in combination with a blockchain.

A computer program product is further provided in the present disclosure, which is configured to implemented the event extraction method when executed by an instruction processor.

It should be understood that, various forms of procedures shown above may be configured to reorder, add or delete blocks. For example, blocks described in the present disclosure may be executed in parallel, sequentially, or in a different order, as long as the desired result of the technical solution disclosed in the present disclosure may be achieved, which will not be limited herein.

## Claims

1. An event extraction method, comprising:
obtaining (S101) an event description text;
determining (SI02) at least one candidate event type according to the event description text, wherein the candidate event type corresponds to a set of query sentences; and
extracting (S103) a corresponding event element from the event description text according to the query sentences.

2. The method of claim 1, wherein extracting (S103) the corresponding event element from the event description text according to the query sentence comprises:
extracting an event trigger word, an event type, an event argument, and an argument role from the event description text according to the query sentences; and
determining the event trigger word, the event type, the event argument, and the argument role as the corresponding event element.

3. The method of claim 1 or 2, wherein the query sentences comprise: at least one first query sentence, the first query sentence corresponds to one event type, and the event type corresponds to at least one second query sentence, the second query sentence corresponds to one argument role, the first query sentence is configured to extract the event trigger word and the event type in the event description text, and the second query sentence is configured to extract the event argument and the argument role.

4. The method of claim 2 or 3, wherein extracting the event trigger word and the event type from the event description text according to the query sentences comprises:
identifying (S203) a trigger word matching with the first query sentence from the event description text, and determining the matched trigger word as the event trigger word; and
determining (S204) an event type corresponding to the first query sentence as the event type extracted.

5. The method of any of claims 2 to 4, wherein extracting the event argument and the argument role from the event description text according to the query sentences comprises:
determining (S205) at least one second query sentence corresponding to the event type extracted;
identifying (S206) an event argument matching with the second query sentence from the event description text, and determining the matched event argument as the event argument extracted; and
determining (S207) an argument role corresponding to the second query sentence as the argument role extracted.

6. The method of claim 4 or 5, wherein identifying the trigger word matching with the first query sentence from the event description text comprises:
inputting the event description text and the first query sentence into a pre-trained event trigger word extraction model to obtain the matched trigger word outputted by the event trigger word extraction model.

7. The method of claim 5 or 6, wherein identifying the event argument matching with the second query sentence from the event description text comprises:
inputting the event description text and the second query sentence into a pre-trained event argument extraction model to obtain the matched event argument outputted by the event argument extraction model.

8. An event extraction apparatus, comprising:
an obtaining module (301), configured to obtain an event description text;
a determining module (302), configured to determine at least one candidate event type according to the event description text, wherein the candidate event type corresponds to a set of query sentences; and
an extracting module (303), configured to extract a corresponding event element from the event description text according to the query sentence.

9. The apparatus of claim 8, wherein the extracting module comprises:
an extracting submodule (4031), configured to extract an event trigger word, an event type, an event argument, and an argument role from the event description text according to the query sentences; and
an obtaining submodule (4032), configured to determine the event trigger word, the event type, the event argument, and the argument role as the corresponding event element.

10. The apparatus of claim 8 or 9, wherein the query sentences comprise: at least one first query sentence, the first query sentence corresponds to one event type, and the event type corresponds to at least one second query sentence, the second query sentence corresponds to one argument role, the first query sentence is configured to extract the event trigger word and the event type in the event description text, and the second query sentence is configured to extract the event argument and the argument role.

11. The apparatus of claim 9 or 10, wherein the extracting submodule is configured to:
identify a trigger word matching with the first query sentence from the event description text, and determine the matched trigger word as the event trigger word; and
determine an event type corresponding to the first query sentence as the event type extracted;
optionally, the extracting submodule is configured to:
determine at least one second query sentence corresponding to the event type extracted;
identify an event argument matching with the second query sentence from the event description text, and determine the matched event argument as the event argument extracted; and
determine an argument role corresponding to the second query sentence as the argument role extracted.

12. The apparatus of claim 11, wherein the extracting submodule is configured to:
input the event description text and the first query sentence into a pre-trained event trigger word extraction model to obtain the matched trigger word outputted by the event trigger word extraction model.

13. The apparatus of claim 12, wherein the extracting submodule is configured to:
input the event description text and the second query sentence into a pre-trained event argument extraction model to obtain the matched event argument outputted by the event argument extraction model.

14. A non-transitory computer-readable storage medium storing computer instructions, wherein when the computer instructions are executed by a computer, the computer is caused to perform the method of any of claims 1-7.

15. A computer program product comprising a computer program, wherein, when the computer program is executed by a processor, the processor is caused to execute the method of any of claims 1-7.
